(19) Europäisches Patentamt
European Patent Office
Office européen des brevets

(11) Numéro de publication: **0 258 159**
B1

(12) **FASCICULE DE BREVET EUROPEEN**

(45) Date de publication du fascicule du brevet: **28.03.90**

(51) Int. Cl.[4]: **B29B 7/48**, B29B 7/90, C08J 3/22, C08L 83/04

(21) Numéro de dépôt: **87420215.3**

(22) Date de dépôt: **10.08.87**

(54) **Procédé de préparation en continu de mélanges-maîtres pour élastomères silicones vulcanisables à chaud.**

(30) Priorité: **12.08.86 FR 8611784**

(43) Date de publication de la demande:
**02.03.88 Bulletin 88/9**

(45) Mention de la délivrance du brevet:
**28.03.90 Bulletin 90/13**

(84) Etats contractants désignés:
**DE FR GB**

(56) Documents cités:
**EP-A-0 149 382**
**EP-A-0 172 678**
**FR-A-1 248 772**
**GB-A-2 146 033**
**US-A-2 868 517**

**JAPAN PLASTICS AGE, vol. 20, juillet-août 1982, pages 39-44, Tokyo, JP; M. MOTOYOSHI: "Kneading of thermoplastic composites"**
**KUNSTSTOFFBERATER, vol. 27, juin 1982, pages 19-23, Frankfurt/Main, DE; K.-M. HESS: "Füllen und Verstärken von Thermoplasten"**

(73) Titulaire: **RHONE-POULENC CHIMIE, 25, quai Paul Doumer, F-92408 Courbevoie Cédex(FR)**

(72) Inventeur: **Alliot-Lugaz, Maurice, 34, rue Baraban, F-69003 Lyon(FR)**
Inventeur: **Roullet, Gilbert, 11, chemin Fleuri, F-69119 Sainte-Foy-Les-Lyon(FR)**

(74) Mandataire: **Vogt, Bernard et al, RHONE-POULENC INTERSERVICES Service Brevets Chimie Centre de Recherches de Saint-Fons B.P. 62, F-69192 Saint-Fons Cédex(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un procédé industriel de préparation, sous forme de pâte épaisse, compacte et homogène, de mélanges-maîtres pour obtenir ultérieurement des élastomères silicones vulcanisables à chaud lorsqu'on a ajouté à ces mélanges-maîtres notamment par exemple des catalyseurs du genre peroxyde.

Il est connu de préparer industriellement des mélanges-maîtres pour des élastomères silicones vulcanisables à chaud, voir par exemple, EP-A 149 382, mais ces procédés présentent l'inconvénient d'être discontinus, c'est-à-dire de nécessiter des étapes indépendantes et successives (procédés par "batches") qui exigent beaucoup de temps et de main d'oeuvre et sont difficiles à automatiser. Ainsi on commence généralement par mélanger dans des appareils fonctionnant en discontinu des gommes silicones très épaisses, ayant des viscosités supérieures à 1 000 000 mPa.s à 25 °C et comprenant de 0,01 à 2 % en poids de groupements vinylés liés aux atomes de silice, avec des charges constituées la plupart du temps de silices de renforcement ayant un diamètre particulaire moyen inférieur à 0,1 micron et dont la surface spécifique (BET) est supérieure à 40 $m^2/g$, de préférence comprise entre 120 et 300 $m^2/g$. La quantité de silice de renforcement par rapport à la gomme est généralement comprise entre 10/100 et 70/100 (en poids). La plupart du temps on charge également dans l'appareil mélangeur, en même temps que la gomme et la silice, au moins un produit, dit "antistructure", comme par exemple une huile $\alpha$ - $\omega$ -dihydroxydiorganopolysiloxane dont la viscosité est comprise entre 20 et 100 mPa.s à 25 °C. La quantité de ce produit antistructure par rapport à la gomme est généralement comprise entre 1/100 et 15/100 en poids, de préférence entre 1/100 et 10/100. On ajoute également parfois d'autres produits, tels que par exemple des charges d'extension (de bourrage), comme la farine de quartz broyé, ainsi que divers autres additifs. Ces appareils mélangeurs comprennent principalement :

1. - des malaxeurs à bras, appelés également "pétrins", constitués d'une cuve dans laquelle tournent lentement, en sens inverse, deux bras dont la forme se rapproche plus ou moins de celle d'un Z. La vidange du produit se fait en fin d'opération, soit par basculement, soit par vis d'extraction,

2. - des "mélangeurs internes", du type BANBURY, comportant une chambre de malaxage dans laquelle tournent en sens inverse deux pétrisseurs dont la section transversale a une forme évoquant celle d'un oeuf à petit bout pointu. La chambre de malaxage est surmontée d'un piston qui exerce une pression (généralement plusieurs bars) sur la matière en cours de malaxage. La vidange du produit, en fin d'opération, se fait par l'ouverture d'une trappe située en bas de la cuve, grâce à la pression exercée par le piston et par les pétrisseurs.

Dans les appareils du type 1), pouvant avoir un volume interne bien plus élevé que ceux du type 2) on arrive à faire des lots ("batches") de mélanges-maîtres de plusieurs tonnes, mais les durées d'opération sont en général longues, de plusieurs heures, en particulier lorsqu'il s'avère indispensable de chauffer, puis ensuite de refroidir, la masse du mélange. D'autre part il est difficile, dans ces appareils du type 1), de disperser correctement certaines charges renforçantes "denses" (d> 0,1) obtenues par exemple par compactage. Les plus gros appareils du second type peuvent produire des lots d'une centaine de kg ou plus, avec des durées de cycle nettement plus courtes (en général de 5 à 15 minutes). Ces derniers appareils peuvent permettre d'effectuer un chauffage assez rapide du mélange, mais sont mal adaptés à la dévolatilisation de la masse du mélange et à l'utilisation de charges poussiérantes. Les appareils discontinus du type 1) et 2) ci-avant, ont d'autre part en commun les défauts suivants :

. durée importante des opérations de chargement et de déchargement, qui s'ajoute à la durée du cyle de mélange,

. nécessité de reprises du mélange pour les opérations ultérieures, en particulier pour la filtration du mélange-maître obtenu et pour son conditionnement. Du fait de la nature très visqueuse et collante des mélanges-maîtres, les opérations de reprise sont rendues laborieuses et elles ne sont pas faciles à automatiser.

Un but de la présente invention est donc un procédé de préparation de mélanges-maîtres pouvant être utilisés pour la formation d'élastomères vulcanisables à chaud, ledit procédé étant continu.

Un autre but de la présente invention est un procédé pouvant être facilement automatisable.

Un autre but de la présente invention est un procédé dans lequel la filtration des mélanges-maîtres peut être faite sans avoir à opérer des reprises desdits mélanges.

Un autre but de la présente invention est un procédé ne nécessitant pas la préparation initiale "d'un mélange de particules s'écoulant bien" (comprenant de la gomme polysiloxanique de viscosité supérieure à 1 000 000 mPa.s et de la silice) avant son introduction dans un malaxeur double-vis, comme ceci est décrit dans le FR 2 289 572.

Un autre but de la présente invention est un procédé de préparation de mélanges-maîtres pour élastomères vulcanisables à chaud permettant l'utilisation de matières premières bon marché, notamment :

. de charges renforçantes non traitées,

. de charges "denses" telles que des silices de précipitation ou de combustion compactées,

. de gommes polysiloxaniques partiellement dévolatilisées.

Un autre but de la présente invention est un procédé dans lequel on peut utiliser soit des silices aérées (de densité généralement inférieure à 0,1), soit des silices densifiées (comme cela a été dit ci-dessus) de densité généralement supérieure à 0,1.

Un autre but de la présente invention est un procédé continu de préparation de mélanges-maîtres pour élastomères vulcanisables à chaud dans lequel le malaxeur utilisé a un très haut "débit spécifique", c'est-à-dire une grande capacité de production par rapport à sa taille et plus particulièrement par rapport au volume interne occupé par les produits en cours d'élaboration.

Un autre but de la présente invention est un procédé continu de préparation de mélanges-maîtres "à chaud" de façon très économique, sans avoir à chauffer le malaxeur double-vis par apport de calories externes, sauf éventuellement un peu dans la zone d'introduction des matières premières, et sans avoir à allonger la durée du malaxage.

Un autre but de la présente invention est l'obtention de mélanges-maîtres :

. bien dévolatilisés (grâce à ce procédé "à chaud") ce qui permet d'obtenir des pièces moulées (en élastomères vulcanisés à chaud) ayant moins de retrait et des pièces extrudées ayant moins de bulles,

. ayant de bonnes propriétés de conservation, c'est-à-dire une faible restructuration au stockage, ces avantages étant acquis même avec des silices de renforcement non préalablement traitées et même avec des silices de précipitation.

Un autre but de la présente invention est un procédé de préparation en continu de mélanges-maîtres pour EVC, intégralement automatisé, depuis la charge des matières premières dans le malaxeur jusqu'à la palettisation des produits (mélanges-maîtres) emballés prêts à être livrés ou utilisés.

Il a maintenant été trouvé et c'est ce qui fait l'objet de la présente invention un procédé de préparation en continu de mélanges-maîtres, sous forme de pâtes épaisses et homogènes, pour obtenir ultérieurement des élastomères silicones vulcanisables à chaud, caractérisé :

- en ce qu'on alimente en continu un malaxeur (1) à double-vis sans fin avec au moins -a) une gomme polysiloxanique comprenant de 0 à 4 % en poids de groupement vinyle et dont la viscosité à 25 °C est supérieure à 1 000 000 mPa.s, et -b) une charge poudreuse dont la surface spécifique est supérieure à 20 $m^2/g$, le rapport pondéral charge/gomme étant compris entre 5/100 et 100/100, de préférence entre 10/100 et 70/100,
- en ce qu'on dégaze les produits volatils au cours de leur avancement dans le malaxeur (1),
- en ce que les vis tournent à une vitesse circonférentielle comprise entre 2cm/s et 5 m/s, de préférence entre 50 cm/s et 3 m/s,
- en ce que le mélange-maître est entraîné par les vis à l'extrémité (10) du malaxeur (1) opposée à celle (9) vers laquelle les produits ont été introduits,
- en ce que le mélange-maître passe en continu du malaxeur (1) double-vis dans un appareil (2) où il est mis en pression,
- en ce que le mélange-maître passe en continu au travers d'un filtre (3) à sa sortie de l'appareil (2).

La description du procédé selon la présente invention sera mieux comprise à l'aide des figures cijointes, qui illustrent, à titre d'exemple, de façon schématique et sans échelle déterminée, des modes de réalisation d'appareillages et d'utilisation d'appareillages permettant d'obtenir les mélanges-maîtres, sans pour cela qu'il y ait aucune restriction.

La figure 1 représente un mode de mise en oeuvre du procédé selon la présente invention.

La figure 2 représente, partiellement, une variante de mise en oeuvre du procédé selon l'exemple 1.

Le procédé selon la présente invention, de préparation en continu de mélanges-maîtres (MM) pour élastomères vulcanisables à chaud (EVC) est mis en oeuvre à l'aide des appareillages représentés schématiquement sur la figure 1. Ces appareillages comprennent tout d'abord un malaxeur (1) double-vis, ces doubles vis étant de préférence co-rotatives et mutuellement raclées, c'est-à-dire tournent toutes les deux dans le même sens. Ce genre de malaxeur (1) double-vis est bien connu et parmi ceux-ci on peut citer notamment les appareils : ZSK et CONTINUA de la Société WERNER et PFLEIDERER ainsi que leur dérivé KOMPIPLAST KP, l'appareil MPC/V de la Société BAKER-PERKINS, les appareils de la Société LEITSTRITZ, l'appareil ZE .... A de la Société BERSTORFF. Ces malaxeurs sont la plupart du temps des appareils modulaires, tant au niveau des fourreaux (parties de l'appareil entourant les vis) que des vis, c'est-à-dire que l'utilisateur procède lui-même à la conception de son malaxeur à partir des éléments que les fabricants mettent à sa disposition par leur catalogue. En règle générale le rapport de la longueur totale de chaque vis par rapport à leur diamètre externe est compris entre 20 et 60, de préférence entre 30 et 50. Les vis (voir figure 1) comportent dans les zones d'alimentation $A_1$, $A_2$ et de malaxage $M_1$, $M_2$ ..... une alternance d'éléments convoyeurs classiques, par exemple à 2 ou 3 filets, et d'éléments en forme de roues dentées ou du type à cames décalées, par exemple à deux ou trois lobes. Dans les zones situées de part et d'autre de la chambre (D) de dévolatilisation, les vis comportent des éléments permettant de freiner l'avancée du produit empâté et de remplir ainsi tout le volume libre entre vis et fourreaux de façon à bien étancher la zone de dévolatilisation. Les fourreaux comportent avantageusement, entre les dispositifs d'introduction (appelés "goulottes" ou "orifices") des zones d'alimentation $A_1$, $A_2$ ..... et le puits D de dévolatilisation sous vide, un ou plusieurs évents $E_1$, $E_2$ ..... atmosphériques judicieusement disposés en aval de la goulotte d'introduction de silice et hors des zones de compression, pour permettre la désaération de la silice et, par voie de conséquence, l'obtention d'un débit élevé.

Dans le procédé selon la présente invention les vis du malaxeur double-vis (1) tournent à une vitesse circonférentielle comprise entre 5 cm/s et 5 m/s, de préférence entre 50 cm/s et 3 m/s, et sont agencées dans les fourreaux de façon telle que les produits introduits (dont il sera question ci-après) sortent de ce malaxeur (1) [sous forme de MM] à une température comprise entre 150 et 250 °C, de préférence entre 180 et 240 °C, leur temps de séjour moyen dans ce malaxeur double-vis étant compris entre 30 secondes et 10 minutes, de préférence entre 1 et 4 minutes.

Les produits introduits dans le malaxeur (1) à double-vis comprennent au moins une gomme diorganopolysiloxane comprenant de 0 à 4 %, de préférence de 0,01 à 3 %, en poids de groupement vinylé et dont

la viscosité à 25 °C est supérieure à 1 000 000 mPa.s (millipascal.seconde), de préférence supérieure à 2 000 000 mPa.s. Ces gommes polysiloxaniques sont des polymères linéaires, de poids moléculaire élevé (supérieur à 500 000 daltons), dont la chaîne diorganopolysiloxanique est constituée essentiellement de motifs de formule $R_2SiO$. Cette chaîne est bloquée à chaque extrémité par un motif de formule $R_3SiO_{0,5}$ et/ou un radical de formule OR'.

Dans ces formules :

- les symboles R, identiques ou différents, représentent des radicaux hydrocarbonés monovalents tels que des radicaux alkyle, par exemple, méthyle, éthyle, propyle, octyle, octadécyle, etc ....., des radicaux aryle, par exemple phényle, tolyle, xylyle, etc ....., des radicaux aralkyle tels que benzyle, phényléthyle, etc ....., des radicaux cycloalkyle et cycloalkényle tels que des radicaux cyclohexyle, cycloheptyle, cyclohexényle, etc ....., des radicaux alkényle, par exemple des radicaux vinyle, allyle, etc ....., des radicaux alkaryle, des radicaux cyanoalkyle tels qu'un radical cyanoéthyle, etc ....., des radicaux halogénoalkyle, halogénoalkényle et halogénoaryle, tels que des radicaux chlorométhyle trifluoro-3,3,3 propyle, chlorophényle, dibromophényle, trifluorométhylphényle,
- le symbole R' représente un atome d'hydrogène, un radical alkyle ayant de 1 à 4 atomes de carbone, le radical bétaméthoxy-éthyle.

De préférence au moins 60 % des groupes R représentent des radicaux méthyle. La présence, le long de la chaîne diorganopolysiloxanique, de faibles quantités de motifs autres que $R_2SiO$, par example de motifs de formule $RsiO_{1,5}$ et/ou $SiO_2$ n'est cependant pas exclue dans la proportion d'au plus 2 % par rapport au nombre de motifs $R_2SiO$.

A titre d'exemples concrets de motifs de formules $R_2SiO$ et $R_3SiO_{0,5}$ et de radicaux de formule OR', peuvent être cités ceux de formules :

$(CH_3)_2SiO$, $CH_3(CH_2{=}CH)SiO$, $CH_3(C_6H_5)SiO$, $(C_6,H_5)_2SiO$,
$CH_3(C_2H_5)SiO$, $(CH_3CH_2CH_2)CH_3SiO$, $CH_3(n.C_3H_7)SiO$,
$(CH_3)_3SiO_{0,5}$, $(CH_3)_2CH_2{=}CHSiO_{0,5}$, $CH_3(C_6H_5)_2SiO_{0,5}$,
$(CH_3)(C_6H_5)(CH_2{=}CH)SiO_{0,5}$
OH, $-OCH_3$, $-OC_2H_5$, $-O-n.C_3H_7$, $-0-iso.C_3H_7$, $-O-n.C_4H_9$,
$-OCH_2CH_2OCH_3$

Ces gommes sont commercialisées par les fabricants de silicone ou peuvent être fabriquées en opérant selon des techniques déjà connues.

Dans le procédé selon la présente invention la gomme (ou les gommes) est introduite, au moins dans sa plus grande partie, dans le malaxeur (1) double-vis, vers l'extrémité amont (9) d'alimentation de ce malaxeur (1) par l'orifice $G_1$ schématisé par une flèche. Si toute la gomme n'est pas introduite en $G_1$, le restant est introduit dans l'appareil malaxeur par l'orifice $G_2$, disposé plus loin.

Une charge poudreuse, par exemple de la silice de renforcement, au moins dans sa plus grande partie, est introduite dans le malaxeur (1) par la goulotte (grand orifice pour alimenter à fort débit des produits solides), schématisée par la flèche $S_1$, qui se trouve en aval de l'orifice $G_1$ dont il a été question ci-avant. Si toute la silice de renforcement n'est pas introduite en $S_1$, le restant est introduit en $S_2$ par une goulotte disposée plus loin. La silice de renforcement dont il s'agit est une silice dont le diamètre particulaire moyen est inférieur à 0,1 micron et dont la surface spécifique (BET) est supérieure à 20 $m^2/g$, généralement comprise entre 40 et 400 $m^2/g$. Ces silices de renforcement peuvent être des silices de combustion et/ou de précipitation ou des mélanges de celles-ci. Elles peuvent avoir été traitées ou non. Lorsqu'elles sont traitées, c'est généralement par des composés organosiliciques habituellement utilisés pour cet usage. Parmi ces composés figurent les méthylpolysiloxanes, tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Les silices de renforcement utilisées peuvent avoir des densités de l'ordre de 0,05, mais ont de préférence des densités supérieures à 0,1 et même à 0,2, pour obtenir des "débits spécifiques" élevés du malaxeur.

La quantité (en poids) de silice de renforcement introduite dans l'appareil (1) malaxeur à double-vis est de 5 à 100 parties, de préférence de 10 à 70, pour 100 parties de gommes.

Dans le procédé selon la présente invention pour la préparation de MM on peut aussi introduire par l'une ou les goulotte(s) $S_1$ et $S_2$ représentées ou par une goulotte latérale non représentée sur la figure 1, au moins une charge dite d'extension qui se présente sous la forme de produits plus grossièrement divisés, de diamètre particulaire moyen supérieur à 0,1 micron. Comme exemples de telles charges on peut citer le quartz broyé, les silices de diatomées, les argiles calcinées, le carbonate de calcium, les fibres de verre, les oxydes det titane, de magnésium, d'aluminium, de fer, de zinc, le silicate de zirconium.

La quantité en poids de charge (S) d'extension introduite dans l'appareil (1) malaxeur à double-vis est de 0 à 175 parties pour 100 parties de gommes. Lorsqu'on introduit 10 parties de silice de renforcement on peut introduire jusqu'à 175 parties de charges d'extension, tandis que lorsqu'on introduit 70 parties de silice de renforcement on introduit pratiquement pas de charge d'extension.

Il doit cependant être indiqué que le procédé selon la présente invention peut être mis en oeuvre sans utiliser de silice de renforcement. A titre indicatif les mélanges-maîtres obtenus peuvent, dans certains cas, contenir essentiellement du noir de carbone comme charge. Dans le procédé selon la présente invention, par charge poudreuse, il faut entendre une poudre dont la granulométrie peut aller jusqu'à quelques millimètres.

Dans le procédé selon la présente invention de préparation de MM il est également avantageux d'introduire dans l'appareil malaxeur (1) à double-vis, par l'orifice [vers l'extrémité (9) du malaxeur (1)]

schématisé par la flèche et la lettre H [orifice H) un produit antistructure pour éviter que les MM obtenus évoluent au cours du temps, par exemple en durcissant. Ces produits ou agents antistructures sont connus et on peut notamment citer les huiles diorganopolysiloxaniques de viscosité inférieure à 5 000 mPa.s à 25 °C, de préférence de viscosité inférieure à 4 000 mPa.s. Ce sont des polymères dont la chaîne diorganopolysiloxane est formée essentiellement de motifs de formule $R''_2SiO$ et est bloquée à chaque extrémité par un radical de formule OR'. Dans ces formules R", identiques ou différents, représentent des radicaux méthyle, phényle, vinyle, au moins 40 % de ces radicaux, de préférence au moins 45 % de ces radicaux étant des radicaux méthyle, tandis que R' a la signification donnée ci-avant pour les gommes.

A titre d'exemples concrets de motifs de formule $R''_2SiO$ et de radicaux de formule OR', peuvent être cités ceux de formules :
$(CH_3)_2SiO$, $CH_3(CH_2{=}CH)SiO$, $CH_3(C_6H_5)SiO$, $(C_6H_5)_2SiO$,
$C_6H_5(CH_2{=}CH)SiO$,
-OH, $OCH_3$, $-OC_2H_5$, $-OC_2H_5$, $-O\text{-}n.C_3H_7$, $-OCH_2CH_2OCH_3$.

De préférence, sont utilisées :
- des huiles diméthylpolysiloxaniques bloquées à chaque extrémité de leur chaîne par des radicaux hydroxyle, méthoxyle, bétaméthoxyéthoxyle, de viscosité 10 à 200 mPa.s à 25 °C ;
- des huiles méthylphénylpolysiloxaniques, constituées de motifs $CH_3(C_6H_5)SiO$, bloquées à chaque extrémité de leur chaîne par des radicaux hydroxyle et/ou méthoxyle, de viscosité 40 à 2 000 mPa.s à 25 °C.

En général on introduit dans le malaxeur (1) à double-vis de 1 à 15 parties, de préférence de 2 à 12 parties de produit antistructure pour 100 parties de gomme de viscosité supérieure à 1 000 000 mPa.s.

Pour la préparation des mélanges-maîtres (MM) selon la présente invention il est également possible d'introduire dans la machine (1) à double-vis des additifs connus pour leurs propriétés améliorantes des MM ou pour la coloration souhaitée qu'ils amènent aux MM. Ces additifs peuvent être introduits en partie avec l'agent antistructure par l'orifice H et/ou être introduits par l'orifice K situé plus en avant de l'extrémité (9) d'introduction du malaxeur (1). Ces additifs, qui représentent une fraction minoritaire par rapport à la gomme et à l'ensemble silice de renforcement + charges, peuvent avantageusement être mélangés entre eux avant d'être introduits dans le malaxeur.

A titre d'exemples de tels additifs qui peuvent être introduits par exemple par l'orifice H et/ou K, on peut citer notamment :
- des organohydrogénopolysiloxanes,
- des polymères organofluorés,
- des composés organosiloxaniques comportant, reliés à l'atome de silicium, au moins un groupe acroyloxyalcoyle ou méthacroyloxyalcoyle,
- des composés renfermant du bore.

Ces additifs sont décrits et leurs proportions par rapport à la gomme (de viscosité inférieure à 1 000 000 mPa.s) sont indiquées dans la demande de brevet français publiée sous le numéro 2 557-121, de la Société RHONE-POULENC. Il est également connu d'ajouter des produits azotés, tels que par exemple de l'hexaméthyldisilazane et/ou de la diéthylamine, la proportion de ces produits étant généralement dans le rapport en poids de 0,1/100 à 10/100 par rapport à la gomme de densité supérieure à 1 000 000 mPa.s. Les vapeurs extraites grâce au puits D sont condensées et décantées. La couche "silicone" peut être en partie recyclée.

A sa sortie de l'appareil malaxeur (1) à double-vis, vers l'extrémité (10), le mélange-maître (MM), dévolatilisé grâce au puits D et à une température comprise entre 150 et 250 °C, est introduit directement en continu dans un appareil monovis extrudeur (2) dont la vitesse circonférentielle de la vis est comprise entre 2 cm/s et 1 m/s, de préférence entre 5 cm/s et 25 cm/s. Cette vis tourne à une vitesse moindre que celle des vis du malaxeur (1) et elle tourne généralement entre 5 et 50 tr/mn (tours par minute).

De façon avantageuse le mélange-maître (MM) est refroidi au cours de son avancement dans l'appareil extrudeur (2) grâce à une double enveloppe externe de refroidissement (prévue autour du fourreau de la double-vis) dans laquelle circule par exemple de l'eau. La vis de l'appareil extrudeur (2) peut également avoir une circulation d'eau dans sa partie centrale pour le refroidissement du MM. Une telle extrudeuse monovis est commercialisée notamment par la Société BERSTORFF par exemple sous la référence KE 90-6D. La compression progressive que la matière subit par la vis de l'extrudeuse (2) permet de pousser, sans échauffement notable, le MM à travers un filtre (3) comprenant généralement un empilement de toiles métalliques retenues par une plaque à trous dans lequel la toile la plus fine est de 50 à 400 mesh. Cet empilement peut être monté de préférence sur un changeur de filtres à changement automatique. Le MM passe alors à travers une filière (4), à la suite du filtre (3). Le mélange-maître à la sortie de la filière (4) est généralement à une température comprise entre 120 et 220 °C.

A sa sortie de la filière (4) le mélange-maître (MM) est conformé, pour pouvoir être refroidi rapidement, sous forme d'au moins une bande, par exemple de 10 cm de largeur et de 1 cm d'épaisseur, ou de joncs ayant de 1 à 10 mm de diamètre.

Si le MM est sous forme de bande, cette dernière peut être par exemple refroidie par immersion dans de l'eau réfrigérée entre 2 et 10 °C, puis séchée par actions combinées de la chaleur résiduelle et d'un ventilateur. Eventuellement la bande peut être refroidie par passage sur et/ou entre des rouleaux métalliques refroidis intérieurement. Cette bande peut passer ensuite dans une trancheuse asservie à une balance et ceci permet de fabriquer des tronçons de MM de poids déterminé, qui par empilement permettent d'obtenir des "pains", généralement de forme parallélipipédique, au poids souhaité, par exemple de 6,25 kg, de 12,5 kg .....

Ces "pains" peuvent être ensuite automatiquement emballés par exemple sous housse rétractable ou sous film étirable, mis en cartons et palettisés.

Dans la figure 1 les opérations de refroidissement et de séchage de 1a (ou des bandes) sont schématisées par le rectangle numéroté (5) tandis que le tranchage, l'empilement et l'emballage sont schématisés par le rectangle numéroté (6). L'étape de palettisation est repérée par le rectangle (8). Il peut être avantageux de réaliser certaines de ces opérations dans une enceinte (7) isolée de l'extérieur, par exemple par un sac, de façon à éviter les souillures ou les poussières ambiantes.

Au lieu d'avoir une filière (4) permettant d'obtenir un (ou des) profilé sous forme d'une bande continue, il peut être avantageux d'avoir une filière permettant d'obtenir des joncs, c'est-à-dire des fils pleins continus, dont le diamètre est compris généralement entre 1 et 10 mm, de préférence entre 2 et 5 mm. Ces joncs peuvent être refroidis par un courant d'air froid avant d'être sectionnés en continu sous forme de granulés ou pastilles selon une technique connue.

Il peut être avantageux, avant de couper ces joncs, de les faire passer dans une atmosphère contenant de fines particules sèches en suspension, comme par exemple du mica, du talc, de la terre de diatomée, du quartz broyé, des silices de combustion ou de précipitation .....

A titre de variante du procédé décrit ci-avant, et bien que l'on préfère mettre en oeuvre le procédé avec des silices de renforcement, de densité supérieure à 0,1, il peut être intéressant pour la préparation de certains types de mélanges-maîtres (MM) et, plus particulièrement pour ceux obtenus à partir de silices de renforcement de densité inférieure à 0,1 et de préférence inférieure à 0,06, de procéder à un prémélangeage de cette silice avec au moins 10 % de la quantité de la ou des gomme(s) de viscosité supérieure à 1 000 000 mPa.s avant d'introduire le mélange obtenu dans le malaxeur (1) à double-vis. Pour cela on utilise un appareil prémélangeur (11) qui est en liaison directe à sa sortie (12) avec l'extrémité (9) d'alimentation du malaxeur (1) double-vis. Ce prémélangeur (11) est schématisé à la figure 2 sur laquelle le malaxeur (1) à double-vis est représenté seulement partiellement. Ainsi dans cette variante du procédé selon la présente invention au moins la silice de renforcement et au moins une partie de la gomme de grande viscosité sont introduites, en continu, dans le prémélangeur (11) vers son entrée (13) d'alimentation par les orifices et les "goulottes" schématisées par $G'_1$ et $S'_1$. Eventuellement un agent antistructure et d'autres additifs, parmi ceux cités ci-avant, peuvent être introduits en $H'_1$. Le mélange densifié obtenu est ensuite introduit, en continu à sa sortie (12) du prémélangeur (11), dans l'extrémité (9) d'alimentation du malaxeur (1) double-vis. Si toute la quantité de gomme n'est pas introduite, en continu, par l'orifice $G'_1$ dans le prémélangeur (11), le restant peut être introduit directement vers l'extrémité (9) d'alimentation du malaxeur (1) à double-vis.

Dans cette variante du procédé selon la présente invention le prémélangeur (11) comporte un ou des rotors tournant à très grande vitesse, c'est-à-dire ayant une vitesse périphérique comprise entre 2 et 100 m/s, de préférence entre 5 et 75 m/s. On entend ici par vitesse périphérique la vitesse linéaire atteinte par le rotor à sa périphérie par rapport à une stator fixe ou bien la vitesse différentielle du rotor par rapport à un autre rotor, par exemple coaxial.

Le prémélangeur (11) peut être disposé horizontalement par rapport au malaxeur (1) double-vis, comme c'est le cas dans le procédé selon la figure 2 et être directement dans le prolongement du malaxeur (1). Eventuellement le prémélangeur (11) peut être disposé verticalement (en équerre) par rapport au malaxeur (1) à double-vis. Lorsque le prémélangeur (11) est disposé horizontalement, ce peut être par exemple l'appareil commercialisé par la Société HENSCHEL sous la référence KONTINUUM TK/D 250. Lorsque le prémélangeur (11) est disposé verticalement, il peut être constitué par exemple d'une "MISCHTURBINE" de la Société BUSS ou d'un appareil SCHUGIMIX de la Société SCHUGI.

Le procédé selon la présente invention de préparation en continu de mélanges-maîtres (MM) pour élastomères silicones vulcanisables à chaud présente notamment l'avantage déjà mentionné d'être facilement automatisable et le fait de permettre l'obtention de très grands "débits spécifiques", c'est-à-dire une grande capacité de production par rapport à la taille du malaxeur à double-vis utilisé et plus précisément par rapport au volume libre de ce malaxeur (1) double-vis lorsqu'il est vide. A titre indicatif, les débits de (MM) obtenus au moyen du malaxeur à double-vis corotatives du type ZE ..... A de la Société BERSTORFF ou CONTINUA de la Société WERNER et PFEIDERER sont compris entre 6 et 120 kg/litre/heure et plus couramment entre 15 et 60 kg/litre/heure, ce qui pour cette dernière fourchette de valeurs correspond à des temps de séjour moyens du produit à l'intérieur du malaxeur compris entre 1 et 4 minutes.

A titre de variante de l'appareillage précédemment décrit pour la mise en oeuvre du procédé selon la présente invention, on peut indiquer que l'appareil (2) monovis peut éventuellement être remplacé par un autre appareil permettant de mettre en pression le (MM) sortant du malaxeur (1) à double-vis. A titre indicatif cet appareil (2) monovis peut être remplacé par une pompe à engrenages.

D'autre part comme cela a déjà été précisé dans la description ci-avant le malaxeur (1) double-vis peut être chauffé vers la zone $A_1$ d'introduction de produits et il peut être éventuellement refroidi vers sont extrémité (10) grâce à des fourreaux entourant ledit malaxeur et dans lesquels circulent des fluides adéquats.

Les exemples suivants illustrent de façon non limitative et à titre illustratif des modes de mises en oeuvre du procédé selon la présente invention. Dans l'exemple 1 on utilise l'appareillage représenté figure 1. Dans l'exemple 2, qui est en fait un contre-exemple, on démontre que le procédé ne peut être satisfaisant quant aux (MM) obtenus si on n'utilise pas l'appareil (2) monovis de l'exemple 1. Dans l'exemple 3 on utilise l'appareillage selon la figure 2 pour la mise en oeuvre du procédé avec une silice de densité inférieure à 0,05. Dans l'exemple 4 qui est en fait un contre-exemple, il est montré que le procédé ne permet pas d'atteindre d'aussi bons rendements si le prémélangeur (11) est enlevé et que l'on utilise de la silice de densité inférieure à 0,05.

- <u>EXEMPLE 1</u> :

Pour fabriquer en continu un mélange-maître d'élastomère silicone vulcanisable à chaud de dureté Shore A = 50, on utilise une ligne de matériels comprenant successivement en allant de l'amont à l'aval :

a) - un malaxeur (1) modulaire continu à double-vis corotatives CONTINUA 120/40 D (diamètre des vis 120 mm ; longueur des vis = 40 fois leur diamètre) de la Société WERNER et PFLEIDERER alimenté en matières premières au moyen de doseurs appropriés dont il sera question ci-après ;

b) - une extrudeuse monovis (2), de diamètre 200/7 D accolée à l'équerre au malaxeur (1) ;

c) - un changeur (3) de filtres BERINGER avec système de filtration constitué d'un ensemble de toiles métalliques, dont la plus fine fait 120 mesh, retenu par une plaque à trous ;

d) - une filière (4) plate de section 200 x 10 mm ;

e) - un système de refroidissement comprenant un bac d'eau réfrigérée à 10 °C dans laquelle est immergée la bande de mélange-maître extrudée, un bac PETER GILLARD sur lequel on peut pulvériser de l'eau froide et ensuite éliminer l'eau résiduelle au moyen de lames d'air produites par un ventilateur ;

f) - un système de tirage et de découpe de la bande ;

g) - un robot manipulateur permettant d'empiler les tronçons de bande sous forme de pains ;

h) - une machine à emballer les pains sous film plastique et à conditionner en boîtes carton lesdits pains ;

i) - une machine à palettiser les boîtes ; une machine à banderoler les palettes avec un film plastique.

La gomme polydiméthylsiloxanique vinylée, de viscosité $2,5.10^7$ mPa.s et contenant 700 ppm de groupements vinylés est dosée et introduite près de l'extrêmité amont (9) des vis du malaxeur (1) au moyen d'une pompe à engrenages VACOREX 70/70 de la Société MAAG. Cette pompe est maintenue en charge grâce à une trémie à large ouverture remplie à niveau constant d'une hauteur de 1,50 mètre de gomme.

La silice de combustion AEROSIL A 200 V (densité = 0,11) de la Société DEGUSSA est dosée de manière précise, à raison de 34 parties pour 100 parties de gomme au moyen d'une balance continue à perte de poids (dite aussi "LOSS AND WEIGH FEEDER") DDW-H4-DDSR 80/600 de la Société BRABENDER, et tombe d'une faible hauteur dans la goulotte $S_1$ du malaxeur (1) située près de l'orifice d'amenée $G_1$ de la gomme, juste en aval de celui-ci.

Un mélange liquide constitué de 3 parties d'une huile silicone $\alpha$ - $\omega$ -hydroxylée de viscosité 50 mPa.s, de 1,5 partie de l'huile précédente traitée $B_2O_3$, et de 0,3 partie de $\gamma$ -méthacryloxypropyltriméthoxysilane est dosé à raison de 4,8 parties pour 100 parties de gomme, au moyen d'une pompe à pistons LEWA type H2 et alimente le malaxeur (1) par l'orifice (H) [voir figure 1.] situé juste en amont de celui $G_1$ de la gomme.

Le profil des vis a été optimisé de façon à obtenir un bon avalement des matières premières en particulier de la silice, la rapidité d'incorporation de celle-ci, une bonne qualité de dispersion et un échauffement convenable (température du mélange n'excédant pas 240 °C). A noter que cet échauffement est limité par les refroidissements conjoints des fourreaux et des vis du malaxeur (1) au moyen de circulation d'eau froide. Par optimisation du profil des vis, on entend le choix judicieux à la fois du nombre, du type et de la position sur les arbres d'entraînement des éléments de vis (éléments malaxeurs, éléments pousseurs), ceci dans toutes les zones de travail de la machine (zone d'incorporation de la silice ; zone de malaxage ; zone de dévolatilisation ; zones de mise en pression, etc .....) et conduisant à la mise au point d'un profil géométrique optimal.

De même, en ce qui concerne les fourreaux, la forme des goulottes et orificies d'alimentation ainsi que leur position d'une part, le nombre et la position des évents atmosphériques d'autre part, ont également fait l'objet d'une optimisation de manière à favoriser la désaération de la silice, son incorporation et sa dispersion fine dans le mélange.

La température de la masse au niveau de la zone de dévolatilisation située près de la sortie du malaxeur (1) est de 227 °C pour une vitesse des vis de 300 t/mn et un débit total de 405 kg/h. La zone de dévolatilisation reliée au circuit de vide est maintenue à une pression de 25 mbar.

Le circuit de vide comprend un condenseur/décanteur et une pompe à anneau liquide SIHI. Les condensats sont recueillis et décantés ; on élimine la phase aqueuse et on récupère une phase huileuse constituée principalement de polysiloxanes méthylés linéaires $\alpha$ - $\omega$ -dihydroxylés et de polysiloxanes méthylés cycliques.

Le produit sort du malaxeur (1) double-vis à 231 °C sous une pression de 2 bars pour entrer dans l'extrudeuse (2) monovis refroidie à l'eau (côté vis et côté fourreau). Le produit monte progressivement en pression jusqu'à 70 bars à hauteur du dispositif de filtration (3), puis après filtration est extrudé sous forme d'une bande de 200 x 10 mm de section ; la température de la masse est alors tombée à 170 °C. La bande est alors immergée dans l'eau sur trois mètres puis passe sur le banc PETER GILLARD à l'issue duquel la température moyenne de la masse est tombée à 70 °C grâce à la pulvérisation d'eau et au soufflage d'air froid sur la surface de la bande. Celle-ci, parfaitement essorée et séchée est ensuite tranchée en tronçons de 50 cm de longueur. Le robot manipulateur muni de ventouses reliées successivement au vide et à un réseau d'air comprimé, empile les tronçons sur 10 cm d'épaisseur et forme des pains de 12,5 kg. La fréquence de tranchage est conditionnée par les relevés de poids des tronçons sur une balance asservissant le dispositif de tranchage. Les pains sont ensuite emballés, conditionnés et palettisés automatiquement.

- EXEMPLE 2 :

Identique à l'exemple 1 sauf en ce qui concerne la filtration et l'extrusion. Celles-ci sont réalisées directement en sortie du malaxeur (1) double-vis et donc sans utiliser l'extrudeuse (2) monovis. Le malaxeur (1) double-vis est capable à lui seul de générer la pression nécessaire à la filtration et à l'extrusion mais dans les conditions opératoires précitées (débit 405 kg/h ; vitesse de vis 300 t/mn), l'auto-échauffement du mélange par friction est plus intense et la température en sortie de double-vis atteint 275 °C, ce qui est considéré comme prohibitif pour les performances du produit final. De plus des moyens supplémentaires de refroidissement de la bande extrudée ont été nécessaires.

- EXEMPLE 3 :

Dans une installation fonctionnant en continu dérivée de celle de l'exemple 1 on fabrique, à raison de 140 kg/heure, un mélange-maître à partir des matières premières suivantes :
- gomme polydiméthylsiloxane contenant 700 ppm de groupements vinyle, de viscosité $2,5.10^7$ mPa.s ..................... 100 parties
- silice de combustion de 300 $m^2/g$ traitée par l'octaméthyltétracyclosiloxane ............................ 54 parties
- huile polydiméthylsiloxane $\alpha$ - $\omega$ -dihydroxylée de viscosité mPa.s ..........................................................4 parties
- $\gamma$ -méthacryloxypropyltriméthoxysilane .......... 1 partie

Par rapport à l'exemple 1, on utilise comme couple malaxeur (1) double-vis/extrudeuse (2) monovis un ensemble de la Société BERSTORFF ZE 60 A-40 D(1)/KE 90-6 D (2) mieux adapté au débit souhaité de 140 kg/h et pour incorporer plus rapidement la silice, on utilise en plus un pré-mélangeur (11) KONTINUUM TK/D-250 de la Société HENSCHEL placé en amont du malaxeur (1) double-vis [figure 2.]. En effet, la silice traitée par l'octaméthylcyclotétrasiloxane se caractérise par une très faible densité (d inférieure ou égale à 0,05), ce qui réduit considérablement le débit de production de (MM) si on utilise simplement la technique d'introduction directe des matières premières dans le malaxeur (1) double-vis par suite des difficultés d'avalement de cette silice. Le pré-mélangeur (11) [figure 2.] dont on a modifié comme on le précise plus loin la zone d'entrée (13), est monté directement sur le malaxeur (1) par son extrêmité (9) sans trémie ou volume intermédiaire de stockage, c'est-à-dire que la trappe de sortie (12) du pré-mélangeur (11) se raccorde juste au-dessus de la goulotte $S_1$ du malaxeur (1), goulotte normalement réservée à l'introduction de la silice seule lorsqu'on utilise la technique directe décrite dans l'exemple 1.

Le profil des vis ainsi que la configuration des fourreaux du malaxeur (1) a fait l'objet du même genre d'optimisation que celui indiqué dans l'exemple 1 pour optimiser débit/qualité de la dispersion et maîtrise de la température de la masse.

Un prélèvement du pré-mélange effectué en (9) à l'entrée du malaxeur (1) double-vis [qui normalement, c'est-à-dire pendant les conditions usuelles de fabrication, est impossible à isoler], montre qu'à ce stade, le produit se trouve déjà densifié. Il est homogène à grande échelle mais encore hétérogène à l'échelle du mm ; il est incapable de couler facilement et a une tendance marquée à se tasser et à colmater une trémie quand on essaie de le faire couler sous charge même faible (inférieure à 20 cm). On comprend que l'installation décrite dans cet exemple puisse quand même parfaitement fonctionner lorsqu'on saura que le pré-mélangeur (11) ne refoule le produit que sous une très faible pression (de l'ordre de $10^3$ Pa), que le produit tombe directement, sans pratiquement aucun volume mort, dans la zone interne amont (9) du malaxeur (1) double-vis par l'intermédiaire d'une goulotte de grande ouverture divergente et que les filets de vis du malaxeur (1) situés juste au-dessous de ladite goulotte sont capables d'évacuer rapidement vers l'aval ledit prémélange en raison d'une profondeur et d'un pas adaptés.

Le pré-mélangeur (11) a été modifié de façon à améliorer l'alimentation, l'enrobage -par la silice- et la fragmentation du flux de gomme entrant. Pour ce faire, on a changé assez considérablement la conception des arrivées de matières premières ; en particulier, la gomme arrive par le haut, à l'extrémité (13), dans le pré-mélangeur (11) sous forme divisée en une vingtaine de petits boudins cylindriques de 8 mm de diamètre grâce à une filière (à trous) de 70 mm ; la silice arrive par une espace annulaire autour des boudins de gomme grâce à une tubulure d'admission de 160 mm de diamètre concentrique de la filière à gomme, et "l'huile" (on a pré-mélangé ici l'huile et le $\gamma$-méthacryloxypropyltriméthoxysilane) arrive par une tubulure cylindrique simple (non représentée) située devant [en considérant le sens de déplacement du rotor externe du pré-mélangeur (11)] l'arrivée de la silice.

Après la mise en route des rotors, on procède à la mise en marche des doseurs dans l'ordre suivant : huile - silice - gomme. La vitesse des rotors du pré-mélangeur (11) est de 500 t/mn et 1 400 t/mn respectivement pour le rotor externe et le rotor interne contra-rotatif.

A l'équilibre de fonctionnement obtenu après 5 minutes de marche, la température du pré-mélange entrant dans le malaxeur (1) double-vis est de 62 °C et sa densité apparente non tassée est de 0,38.

Le produit entraîné par le malaxeur (1) double-vis est progressivement transformé en continu en pâte qui est alors échauffée par friction, dévolatilisée, filtrée, extrudée, refroidie, mise en forme et emballée automatiquement comme dans l'exemple 1 et ceci sans aucune rupture de charge ni aucun stockage temporaire même bref de matière entre les doseurs des matières premières et la production des pains de mélange-maître emballés.

- EXEMPLE 4 :

On essaye de fabriquer le mélange-maître de l'exemple 3 mais en revenant à la technique d'introduction directe de la silice et des autres matières premières dans le malaxeur (1) double-vis, c'est-à-dire en se passant du pré-mélangeur (11). Etant donné la très faible densité de la silice, il y a engorgement du malaxeur (1) avec le débit total initialement imposé (140 kg/g) et on doit ramener ce dernier à 45 kg/h seulement pour obtenir un fonctionnement stable dudit malaxeur (1), tout en ayant une qualité de mélange-maître inférieure.

**Revendications**

1. Procédé de préparation en continu de mélanges-maîtres, sous forme de pâtes épaisses et homogènes, pour obtenir ultérieurement des élastomères silicones vulcanisables à chaud, caractérisé :
– en ce qu'on alimente en continu un malaxeur (1) à double-vis sans fin avec au moins -a) une gomme polysiloxanique comprenant de 0 à 4 % en poids de groupement vinyle et dont la viscosité à 25 °C est supérieure à 1 000 000 mPa.s, et -b) une charge poudreuse dont la surface spécifique est supérieure à 20 m²/g, le rapport pondéral charge/gomme étant compris entre 5/100 et 100/100, de préférence entre 10/100 et 70/100,
– en ce qu'on dégaze les produits volatils au cours de leur avancement dans le malaxeur (1),
– en ce que les vis tournent à une vitesse circonférentielle comprise entre 2cm/s et 5 m/s, de préférence entre 50 cm/s et 3 m/s,
– en ce que le mélange-maître est entraîné par les vis à l'extrémité (10) du malaxeur (1) opposée à celle (9) vers laquelle les produits ont été introduits,
– en ce que le mélange-maître passe en continu du malaxeur (1) double-vis dans un appareil (2) où il est mis en pression,
– en ce que le mélange-maître passe en continu au travers d'un filtre (3) à sa sortie de l'appareil (2).

2. Procédé selon la revendication 1, caractérisé en ce qu'on alimente de plus le malaxeur (1) double-vis avec au moins un agent antistructure, la proportion de cet agent étant de 1/100 à 15/100, de préférence de 2 à 12 % en poids, par rapport à la gomme polysiloxanique.

3. Procédé selon l'une quelconque des revendications précédentes, caractérisé en ce que la charge est une charge de renforcement dont la surface spécifique est supérieure à 20 m²/g, généralement comprise entre 40 et 400 m²/g.

4. Procédé selon la revendication 3, caractérisé en ce que la charge de renforcement est une silice de combustion et/ou de précipitation.

5. Procédé selon l'une quelconque des revendications précédentes, caractérisé en ce que l'appareil (2) de mise en pression est un appareil monovis (2) dont la vitesse circonférentielle est comprise entre 2 cm/s et 1 m/s, de préférence entre 5 cm/s et 25 cm/s.

6. Procédé selon l'une quelconque des revendications précédentes, caractérisé en ce que le temps de séjour moyen des produits dans le malaxeur (1) double-vis est compris entre 30 secondes et 10 minutes, de préférence entre 1 et 4 minutes.

7. Procédé selon l'une quelconque des revendications précédentes, caractérisé en ce que le profil et la configuration des vis à l'intérieur du fourreau interne du malaxeur (1) double-vis sont tels que les produits, au cours de leur avancement, s'échauffent entre 150 et 270 °C, de préférence entre 180 et 240 °C.

8. Procédé selon l'une quelconque des revendications précédentes, caractérisé en ce que le mélange-maître filtré passe en continu, à la sortie du filtre (3), à travers une filière (4) permettant l'obtention de bandes ou profilés qui sont refroidis, sectionnés, conditionnés à la forme et au poids voulus, et emballés automatiquement.

9. Procédé selon la revendication 6, caractérisé en ce qu'au moins le refroidissement des bandes ou profilés, leur sectionnement et leur conditionnement se font dans une enceinte (7) surpressée, avec un sas.

10. Procédé selon l'une quelconque des revendications 8 ou 9, caractérisé en ce qu'à la sortie de la filière (4) on obtient des joncs qui sont refroidis puis recouverts par pulvérisation d'une fine couche de particules sèches avant d'être tranchés en granulés.

11. Procédé selon l'une quelconque des revendications 5 à 10, caractérisé en ce que le mélange-maître est refroidi partiellement au cours de son avancement dans l'appareil (2) monovis.

12. Procédé selon l'une quelconque des revendications 4 à 11 dans lequel les silices de renforcement utilisées ont une densité supérieure à 0,1, de préférence supérieure à 0,2.

13. Procédé selon l'une quelconque des revendications 4 à 11, caractérisé en ce que la silice utilisée a une densité inférieure à 0,1, de préférence inférieure à 0,06, et en ce qu'avant d'être introduites dans le malaxeur (1) double-vis, la silice et au moins une partie de la gomme sont introduites en continu dans un appareil pré-mélangeur (11) fonctionnant en continu sans stockage intermédiaire et dont la sortie (12) débouche directement vers l'extrémité (9) d'alimentation du malaxeur (1) à double-vis, la vitesse circonférentielle des moyens d'agitation de cet appareil pré-mélangeur (11) étant comprise entre 2 m/s et 100 m/s.

14. Procédé selon la revendication 13, dans lequel la silice de renforcement utilisée est une silice de combustion traitée par un polyorganocyclopolysiloxane, de préférence par l'octaméthylcyclotétrasiloxane.

**Claims**

1. Process for continuous preparation of masterbatches, in the form of thick and homogeneous doughs, to obtain subsequently silicone elastomers capable of being vulcanized when heated, characterized:
– in that an endless twin-screw mixer (1) is fed continuously with at least -a) a polysiloxane resin containing from 0 to 4% by weight of vinyl group and whose viscosity at 25°C is higher than 1,000,000 mPa s, and -b) a powdery filler whose specific surface area is greater than 20 m²/g, the filler/resin weight ratio being between 5/100 and 100/100, preferably between 10/100 and 70/100,
– in that the volatile products are degassed in the

course of their progress in the mixer (1),
– in that the screws rotate at a circumferential velocity of between 2 cm/s and 5 m/s, preferably between 50 cm/s and 3 m/s,
– in that the masterbatch is entrained by the screws at the end (10) of the mixer (1) away from that (9) towards which the products have been introduced,
– in that the masterbatch flows continuously from the twin-screw mixer (1) into an apparatus (2) where it is pressurized, and
– in that the masterbatch flows continuously through a filter (3) as it leaves the apparatus (2).

2. Process according to Claim 1, characterized in that the twin-screw mixer (1) is additionally fed with at least one antistructure agent, the proportion of this agent being from 1/100 to 15/100, preferably from 2 to 12% by weight, relative to the polysiloxane resin.

3. Process according to either of the preceding claims, characterized in that the filler is a reinforcing filler whose specific surface area is greater than 20 $m^2/g$, generally between 40 and 400 $m^2/g$.

4. Process according to Claim 3, characterized in that the reinforcing filler is a pyrogenic and/or precipitated silica.

5. Process according to any one of the preceding claims, characterized in that the apparatus (2) for pressurizing is a single-screw apparatus (2) whose circumferential velocity is between 2 cm/s and 1 m/s, preferably between 5 cm/s and 25 cm/s.

6. Process according to any one of the preceding claims, characterized in that the average residence time of the products in the twin-screw mixer (1) is between 30 seconds and 10 minutes, preferably between 1 and 4 minutes.

7. Process according to any one of the preceding claims, characterized in that the profile and the configuration of the screws inside the inner barrel of the twin-screw mixer (1) are such that the products heat up between 150 and 270°c, preferably between 180 and 240°C, in the course of their progress.

8. Process according to any one of the preceding claims, characterized in that the filtered masterbatch flows continuously, on leaving the filter (3), through a die (4) making it possible to obtain tapes or profiles which are cooled, sectioned, packaged in the desired shape and weight and are wrapped automatically.

9. Process according to Claim 6, characterized in that at least the cooling of the tapes or profiles, their sectioning and their packaging take place in an overpressurized enclosure (7), with an air lock.

10. Process according to either of Claims 8 and 9, characterized in that rods are obtained at the die (4) exit which are cooled and then spray-coated with a fine layer of dry particles before being chopped into granules.

11. Process according to any one of Claims 5 to 10, characterized in that the masterbatch is partially cooled in the course of its progress in the single-screw apparatus (2).

12. Process according to any one of Claims 4 to 11, in which the reinforcing silicas employed have a relative density higher than 0.1, preferably higher than 0.2.

13. Process according to any one of Claims 4 to 11, characterized in that the silica employed has a relative density lower than 0.1, preferably lower than 0.06, and in that before being introduced into the twin-screw mixer (1), the silica and at least a part of the resin are introduced continuously into a premixer apparatus (11) operating continuously without intermediate storage and whose exit (12) opens directly towards the feed end (9) of the twin-screw mixer (1), the circumferential velocity of the means for stirring this premixer apparatus (11) being between 2 m/s and 100 m/s.

14. Process according to Claim 13, in which the reinforcing silica employed is a pyrogenic silica treated with a polyorganocyclopolysiloxane, preferably with octamethylcyclotetrasiloxane.

**Patentansprüche**

1. Verfahren zur kontinuierlichen Herstellung von Muttermischungen in Form homogener und dicker Pasten, um später heißvulkanisierbare Silicon-Elastomere zu erhalten, dadurch gekennzeichnet:
– daß man kontinuierlich einen Endlos-Doppelschneckenkneter (1) mit mindestens -a) einem Polysiloxangummi, enthaltend 0 bis 4 Gewichtsprozent Vinylgruppen, und dessen Viskosität bei 25°C oberhalb 1 000 000 mPa.s ist, und -b) einer pulverigen Charge, deren spezifische Oberfläche oberhalb 20 $m^2/g$ ist, beschickt, wobei das Gewichtsverhältnis Charge/Gummi zwischen 5/100 und 100/100, vorzugsweise zwischen 10/100 und 70/100 liegt,
– daß man die flüchtigen Produkte im Verlauf ihrer Vorwärtsbewegung in dem Kneter (1) entgast,
– daß sich die Schnecken mit einer Umfangsgeschwindigkeit zwischen 2 cm/s und 5 m/s, vorzugsweise zwischen 50 cm/s und 3 m/s drehen,
– daß das Muttergemisch von den Schnecken am Ende (10) des Kneters (1) gegenüber demjenigen von (9), gegen das die Produkte eingeführt wurden, mitgeführt wird.
– daß das Muttergemisch kontinuierlich von dem Doppelschneckenkneter (1) in eine Vorrichtung (2) passiert, wo es unter Druck gesetzt wird,
– daß die Muttermischung kontinuierlich quer durch einen Filter (3) am Ausgang der Vorrichtung (2) passiert.

2. Verfahren gemäß Anspruch 1, dadurch gekennzeichnet, daß man den Doppelschneckenkneter (1) außerdem mit mindestens einem Antistrukturmittel speist, wobei das Mengenverhältnis dieses Mittels von 1/100 bis 15/100, vorzugsweise von 2 bis 12 Gewichtsprozent in bezug auf das Polysiloxangummi beträgt.

3. Verfahren gemäß einem der vorhergehenden Ansprüche, dadurch gekennzeichnet, daß die Charge ein Verstärkungsfüllstoff ist, dessen spezifische Oberfläche oberhalb 20 $m^2/g$, im allgemeinen zwischen 40 und 400 $m^2/g$ beträgt.

4. Verfahren gemäß Anspruch 3, dadurch gekennzeichnet, daß der Verstärkungsfüllstoff eine pyrogene und/oder Fällungskieselsäure ist.

5. Verfahren gemäß einem der vorhergehenden Ansprüche, dadurch gekennzeichnet, daß die Druckvorrichtung (2) ein Einschneckenapparat (2) ist, dessen Umlaufgeschwindigkeit zwischen 2 cm/s und 1 m/s, vorzugsweise zwischen 5 cm/s und 25 cm/s liegt.

6. Verfahren gemäß einem der vorhergehenden Ansprüche, dadurch gekennzeichnet, daß die mittlere Verweilzeit der Produkte in dem Doppelschneckenkneter (1) zwischen 30 Sekunden und 10 Minuten, vorzugsweise zwischen 1 und 4 Minuten beträgt.

7. Verfahren gemäß einem der vorhergehenden Ansprüche, dadurch gekennzeichnet, daß das Profil und der Aufbau der Schnecken im Inneren der Innenbuchse des Doppelschneckenkneters (1) derart sind, daß die Produkte im Verlauf ihrer Beförderung sich auf 150 bis 270°C, vorzugsweise zwischen 180 und 240°C erhitzen.

8. Verfahren nach einem der vorhergehenden Ansprüche, dadurch gekennzeichnet, daß die filtrierte Muttermischung (masterbatch) kontinuierlich am Ausgang des Filters (3) eine Spinndüse (4) passiert, was die Erzielung von Bahnen oder Profilen ermöglicht, welche abgekühlt, geschnitten, in die gewünschte Form und auf das gewünschte Gewicht gebracht und automatisch verpackt werden.

9. Verfahren gemäß Anspruch 6, dadurch gekennzeichnet, daß das Abkühlen der Bahnen oder Profile, ihr Schneiden und ihre Zurichtung in einem Überdruckgefäß (7) mit einer Schleuse stattfindet.

10. Verfahren gemäß einem der Ansprüche 8 oder 9, dadurch gekennzeichnet, daß man am Ausgang der Spinndüse (4) Stäbe erhält, die abgekühlt, dann durch Zerstäubung mit einer feinen Schicht trockener Teilchen überzogen werden, bevor sie zu Granulat geschnitten werden.

11. Verfahren gemäß einem der Ansprüche 5 bis 10, dadurch gekennzeichnet, daß das Muttergemisch im Laufe seiner Fortbewegung in dem Einschneckenapparat (2) teilweise abgekühlt wird.

12. Verfahren gemäß einem der Ansprüche 4 bis 11, dadurch gekennzeichnet, daß das verwendete Verstärkungssiliciumdioxid eine Dichte oberhalb 0,1, vorzugsweise oberhalb 0,2 hat.

13. Verfahren gemäß einem der Ansprüche 4 bis 11, dadurch gekennzeichnet, daß das verwendete Siliciumdioxid eine Dichte unterhalb 0,1, vorzugsweise unterhalb 0,06 hat und daß vor der Einführung in den Doppelschneckenkneter (1) das Siliciumdioxid und mindestens ein Teil des Gummis kontinuierlich in einen Vormischapparat (11) eingeführt werden, der kontinuierlich ohne Zwischenlagerung arbeitet und dessen Ausgang (12) direkt in das Zuführungsende (9) des Doppelschneckenkneters (1) mündet, wobei die Umfangsgeschwindigkeit der Rührmittel dieses Vormischungsapparats (11) zwischen 2 m/s und 100 m/s liegt.

14. Verfahren gemäß Anspruch 13, dadurch gekennzeichnet, daß das verwendete Verstärkungssiliciumdioxid eine pyrogene Kieselsäure ist, die mit einem Polyorgano-cyclopolysiloxan, vorzugsweise mit Octamethyl-cyclotetrasiloxan behandelt wurde.

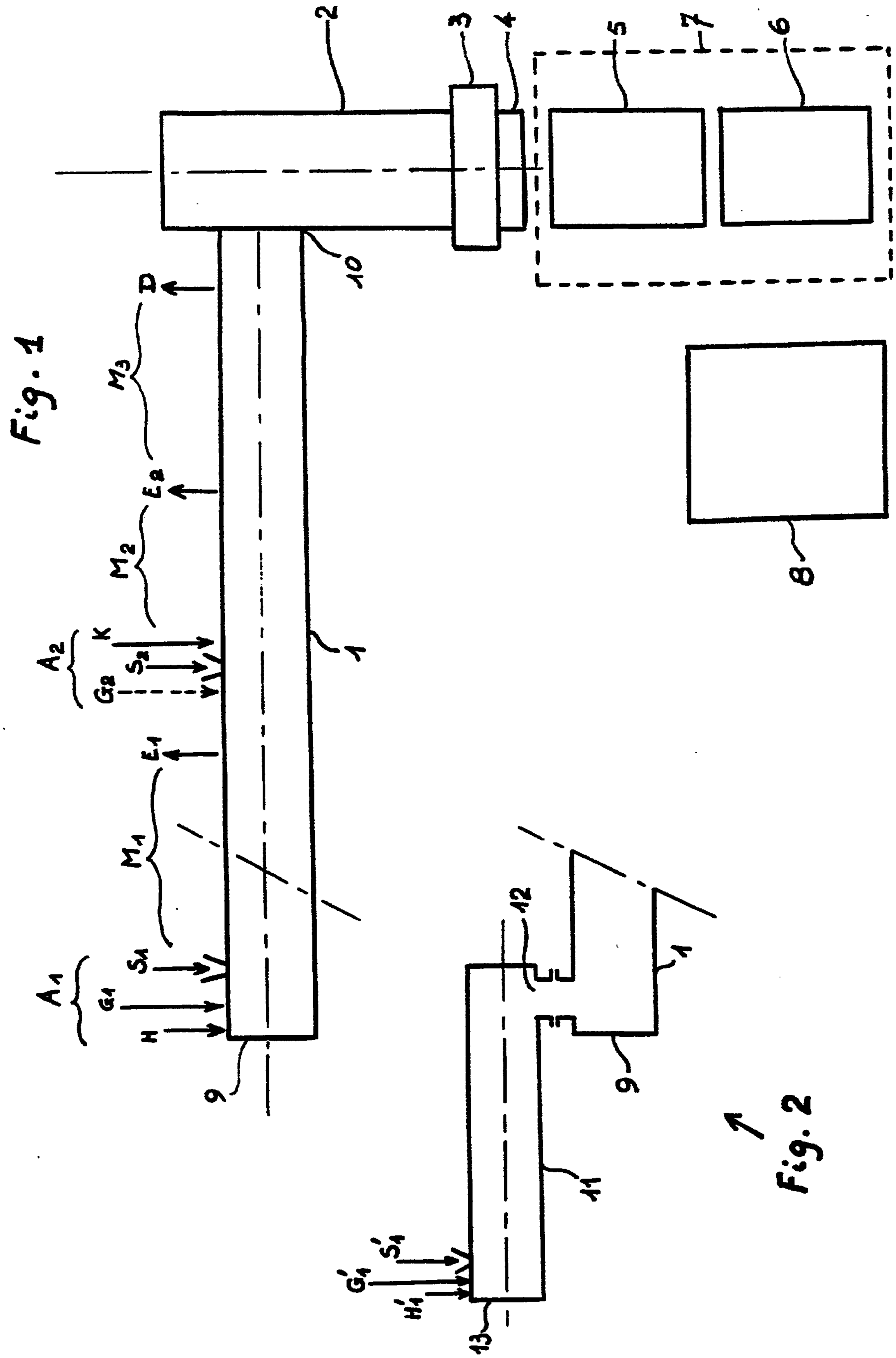
2
3
4
5
7
6
10
D
M3
E2
M2
A2
K
S2
G2
1
E1
M1
8
A1
S1
G1
H
9
12
1
9
11
G'1
S'1
H'1
13

Fig. 1

Fig. 2